(19) Europäisches Patentamt
European Patent Office
Office européen des brevets

(11) Veröffentlichungsnummer: **0 313 932 B1**

(12) **EUROPÄISCHE PATENTSCHRIFT**

(45) Veröffentlichungstag der Patentschrift: **15.07.92**

(51) Int. Cl.5: **C08G 18/80**, C09D 5/44, C08G 18/50

(21) Anmeldenummer: **88117071.6**

(22) Anmeldetag: **14.10.88**

# (54) Härtungskomponente für Kunstharze, diese enthaltende härtbare Mischungen sowie deren Verwendung.

(30) Priorität: **15.10.87 DE 3734916**

(43) Veröffentlichungstag der Anmeldung:
**03.05.89 Patentblatt 89/18**

(45) Bekanntmachung des Hinweises auf die Patenterteilung:
**15.07.92 Patentblatt 92/29**

(84) Benannte Vertragsstaaten:
**AT BE DE ES FR GB IT NL SE**

(56) Entgegenhaltungen:
**EP-A- 0 053 766**
**AT-B- 381 500**
**DE-A- 2 550 156**

(73) Patentinhaber: **HOECHST AKTIENGESELL-SCHAFT**
**Postfach 80 03 20**
**W-6230 Frankfurt am Main 80(DE)**

(72) Erfinder: **Brindöpke, Gerhard, Dr.**
**Loreleistrasse 18**
**W-6230 Frankfurt am Main 80(DE)**
Erfinder: **Plum, Helmut, Dr.**
**Nibelungenstrasse 3**
**W-6204 Taunusstein(DE)**

**EP 0 313 932 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt (Petersen, Taube; Liebigs Ann. Chem. 562, (1949) 205), daß sich aus Isocyanaten und Malonsäuredialkylestern in Gegenwart von Natrium oder Natriumalkoholaten als Katalysatoren Verbindungen mit einer Methantricarbonsäuredialkylestermonoamid-Säurestruktureinheit herstellen lassen, die bereits ab zirka 130 °C mit Polyol-Harzen unter Vernetzung und Abspaltung von Alkanol reagiert.

Diese Reaktion wurde in der Folge vielfach zur Herstellung von Härtungskomponenten für flüssige Einbrennlacke oder Einbrennlacke mit organischen Lösungsmitteln verwendet.

So wird in der DE-Offenlegungsschrift 2342603 ein Verfahren zur Herstellung von mit Malonsäuredialkylester blockierten Biuretpolyisocyanaten beschrieben. Dabei wird zunächst in einer verhältnismäßig umständlichen Zweistufenreaktion (Herstellung eines Gemisches aus Biuretpolyisocyanat und monomerem Diisocyanat und anschließende Entfernung des monomeren Diisocyanats) ein monomerenfreies Biuretpolyisocyanat hergestellt, das dann mit Malonsäuredialkylester umgesetzt wird. Bevorzugt wird ein stöchiometrischer Überschuß an Malonsäuredialkyester eingesetzt, so daß das Reaktionsgemisch nicht umgesetzten Malonsäuredialkylester enthält, der nicht an der Vernetzungsreaktion teilnehmen und sich deshalb auf die Filmeigenschaften negativ auswirken kann.

Aus der DE-Offenlegungsschrift 2550156 ist weiterhin ein Verfahren zur Herstellung von in Lacklösemitteln leicht löslichen Polyisocyanatgemischen mit "blockierten" Isocyanatgruppen bekannt, bei welchem 3-Isocyanatomethyl-3,5,5-trimethylcyclohexylisocyanat vor der Reaktion mit einem CH-aktiven Blockierungsmittel partiell mit einem Polyol umgesetzt wird. Die hierin beschriebenen "verkappten" Polyisocyanate lassen sich im Prinzip auch in Zubereitungen für die kathodische Elektrotauchlackierung verwenden, wenn sie mit basischen Kunstharzen, die nach einer Teilneutralisation mit Säure wasserverdünnbar sind, kombiniert werden. Bei niedrigen Einbrenntemperaturen von z.B. 140 °C erhält man jedoch in den meisten Fällen Beschichtungen, deren Härte und Lösungsmittelbeständigkeit nicht ausreichend sind. Auch die Mitverwendung von Aminoplastharzen, wie sie in der DE-Offenlegungsschrift 2723117 beschrieben wird, bringt keine Vorteile; wahrscheinlich werden die zur Härtung der Aminoplastharze erforderlichen Katalysatoren - i.a. Sulfonsäure - durch die basischen Kunstharze neutralisiert und damit unwirksam.

In der österreichischen Patentschrift Nr. 381500 wird ein Verfahren zur Herstellung von Vernetzungskomponenten für Kunstharze, die zur Ester- und/oder Amidbildung mit Carbonsäuren befähigte Gruppen enthalten, aus a) Diisocyanaten, b)CH-aciden Alkylestern und c) Polyaminen und/oder Polyaminopolyolen beschrieben. Diese Vernetzungskomponenten zeichnen sich dadurch aus, daß sie mit den zur Ester- oder Amidbildung befähigten Kunstharzen schon bei relativ niedriger Temperatur von 120 - 140 °C unter Vernetzung reagieren, wobei die entstehenden Spaltprodukte wenig umweltbelastend sind, vor allem, wenn die umesterungs- bzw. umamidierungsfähigen Estergruppen als Alkoholkomponente niedere Alkohole, insbesondere Ethanol enthalten. Obwohl sich diese Produkte bewährt haben, besitzen sie Nachteile hinsichtlich der Löslichkeit in häufig verwendeten Lacklösemitteln, wie Carbonsäureestern, z.B. Butylacetat. Werden sie zusammen mit kationischen Kunstharzen, z.B. mit Aminopolyetherpoyolen, in wäßrigen Systemen für die Elektrotauchlackierung eingesetzt, kann es außerdem schon nach wenigen Tagen zum Ausfallen und Absetzen der Härter im Lackbad kommen.

Es bestand daher die Aufgabe, eine Härtungskomponente zu finden, die in üblichen Lacklösemitteln, wie z.B. Carbonsäureestern, löslich ist, mit Hydroxyl- und/oder Aminogruppen aufweisenden Bindemitteln bei möglichst niedriger Temperatur härtet und die bei der Härtung nur geringe, die Umwelt nur wenig belastende Mengen an Abspaltprodukten freisetzt. Außerdem sollte diese Härtungskomponente insbesondere in Systemen für die kathodische Elektrotauchlackierung in Kombination mit kationischen, nach zumindest teilweiser Protonierung wasserverdünnbaren Kunstharzen einsetzbar sein, ohne daß es im Lackbad zu Ausfällungen oder Absetzerscheinungen kommt.

Es wurde nun gefunden, daß Umsetzungsprodukte aus CH-aciden Alkylestern, Polyisocyanaten und Polyoxyalkylenpolyaminen diese Forderungen erfüllen.

Die Erfindung betrifft demgemäß eine Härtungskomponente (A) für zur Amid- und/oder Esterbildung befähigte Kunstharze (B), die ein Reaktionsprodukt ist aus

(a) einem Polyisocyanat,
(b) einem CH-aciden Alkylester,
(c) einem Polyamin und
(d) gegebenenfalls weiteren NH- und/oder OH-reaktiven Verbindungen,

das dadurch gekennzeichnet ist, daß die Verbindung (b) die Formel

$X\text{-}CHR^2\text{-}CO_2R^1$   (I)

besitzt, in der X = $CO_2R^1$, CN, $CONH_2$, $CONHR^1$, $CON(R^1)_2$, $COR^1$ oder $NO_2$ bedeutet, wobei $R^1$ ein unverzweigter oder verzweigter Alkylrest mit 1 bis 8 C-Atomen ist,
und $R^2$ für H oder $R^1$ steht und
das Polyamin (c) ein Polyoxyalkylenamin mit mindestens zwei Aminogruppen ist.

Weiterhin betrifft die Erfindung ein Verfahren zur Herstellung dieser Härtungskomponente (A), härtbare Mischungen, welche diese Härtungskomponente (A) enthalten, sowie die Verwendung dieser härtbaren Mischungen in Lackzubereitungen, insbesondere in Autoreparaturlacken.

Die erfindungsgemäßen Härtungskomponenten (A) reagieren mit Hydroxyl- und/oder Aminogruppen tragenden Polymeren (B) bereits ab 100 ° C unter Umesterung und/oder Umamidierung, wobei als Spaltprodukt nur der Alkohol aus dem CH-aciden Alkylester auftritt. Sie sind mit Carbonsäureestern, wie Butylacetat, klar verdünnbar und eignen sich besonders als Bestandteil von wasserhaltigen Lacken, insbesondere in kathodisch nach dem ETL-Verfahren abscheidbaren Zusammensetzungen. Es kommt dabei zu keinerlei Ausfällungen oder Absetzerscheinungen im Lackbad. Überraschenderweise erhält man nach der kathodischen Abscheidung auch Filme mit einer höheren Schichtdicke als unter vergleichbaren Bedingungen mit einem Vernetzer ohne Polyoxyalkylenaminen.

Für die Herstellung der erfindungsgemäßen Härtungskomponenten (A) werden als Komponente (a) bevorzugt die großtechnisch verfügbaren Polyisocyanate wie Toluylendiisocyanat, Hexamethylendiisocyanat und Isophorondiisocyanat (IPDI) eingesetzt. Weiterhin sind hierfür die aus der Polyurethanchemie bekannten Verbindungen, einschließlich entsprechender Präpolymerer, gegebenenfalls in Mischung untereinander geeignet. Diese Polyisocyanate besitzen mindestens 2 Isocyanatgruppen, vorzugsweise beträgt deren Zahl 2 bis 10 und insbesondere 2 bis 4.

Beispiele für derartige Polyisocyanate sind die aliphatischen Trimethylen-, Tetramethylen-, Pentamethylen-, 1,2-Propylen-, 1,2-Butylen, 2,3-Butylen, 1,3-Butylen, Ethylidin- und Butylidindiisocyanate, 2.2.4-Trimethylhexamethylendiisocyanat, 1,12-Dodecandiisocyanat, Dicycloalkylendiisocyanate wie 1,3-Cyclopentan-, 1,4-Cyclopentan- und 1,2-, 1,3- und 1,4-Cyclohexandiisocyanate; weiterhin Diisocyanate dimerer Säuren, aromatische Diisocyanate wie 1,3-Phenylen-, 1,4-Phenylen, 4,4-Diphenyl-, 1,5-Naphthalin- und 1,4-Naphthalindiisocyanate, die aliphatisch-aromatischen Diisocyanate, wie 4,4-Diphenylenmethan-, 4,4-Toluidin- und 1,4-Xylilendiisocyanate, Naphthalin-1,5-diisocyanat, kernsubtituierte aromatische Isocyanate wie Dianisidindiisocyanat, 4,4-Diphenyletherdiisocyanat und Chlordiphenylendiisocyanat, Diphenylmethan-2,4- und/oder -4,4-diisocyanat, 3,2- oder 3,4-Diisocyanato-4-methyldiphenylmethan, die Triisocyanate wie Triphenylmethan-4,4-4″Triisocyanat, 1,3,5-Benzoltriisocyanat und 2,4,6-Toluoltriisocyanat, und die Tetraisocyanate, wie 4,4-Diphenyldimethyldimethan-2,2-5,5-tetraisocyanat oder Gemische dieser Verbindungen.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophonatgruppen, Isocyanuratgruppen, Urethangruppen, acylierte Harnstoffgruppen und Biuretgruppen aufweisen.

In der Formel (I) der CH-aciden Alkylester (b) stehen die Reste X, $R^1$ und $R^2$ vorzugsweise für:
X = $CO_2R^1$ oder CN;
$R^1$ = Alkylrest mit 1 bis 6 C-Atomen;
$R^2$ = H.

Beispiele für derartige Verbindungen (b) sind Malonsäuredialkylester von Alkoholen mit 1 bis 8, vorzugsweise 1 bis 6 C-Atomen, wie Malonsäuredimethyl-, Malonsäurediethyl-, Malonsäurediisopropyl-, Malonsäuredioctylester; die entsprechende Ester der Cyanessigsäure, wie z.B. Cyanessigsäureethylester oder Cyanessigsäurehexylester; die entsprechenden Ester der Acetessigsäure, wie Acetessigsäureethylester; Diketone wie Acetylaceton; Malondinitril oder Malonsäurediamide oder -monoamide. Vorzugsweise werden Cyanessigsäuremethyl, -ethyl und -butylester sowie Malonsäuredimethylester und -diethylester eingesetzt. Es kann in manchen Fällen auch vorteilhaft sein, wenn $R^1$ ein verzweigter Alkylrest, insbesondere 2-Ethylhexyl ist, da damit der Neigung einer Lackschicht zur Kraterbildung beim Einbrennen entgegengewirkt werden kann. Die Methyl- und Ethylester ergeben demgegenüber besonders niedrige Einbrenntemperaturen und niedermolekulare Abspaltprodukte, die außerdem besonders unbedenklich sind. Auch Gemische verschiedener CH-acider Alkylester sind möglich

Die Polyoxyalkylenamine (c) enthalten mindestens eine Oxyalkylengruppe, vorzugsweise Oxypropylengruppe, und mindestens zwei vorzugsweise primäre Aminogruppen. Das Molekulargewicht (Mw) liegt in der Regel zwischen 132 und 5000, vorzugsweise 230 und 4000 und insbesondere 400 und 2000, während das Äquivalentgewicht, bezogen auf die Aminogruppe, zumeist 68 bis 2000, vorzugsweise 116 bis 1900, insbesondere von 162 bis 1052 beträgt. Dabei werden die primären Amine als monofunktionell angesehen.

Derartige Polyoxyalkylenpolyamine sind bekannt und werden beispielsweise in den US-Patentschriften 3.236.895, 3.654.370, 4.122.069 und 4.420.574 beschrieben, auf die hiermit Bezug genommen wird.

Erfindungsgemäß bevorzugte Polyoxyalkylenpolyamine sind beispielsweise solche der allgemeinen Formel (II)

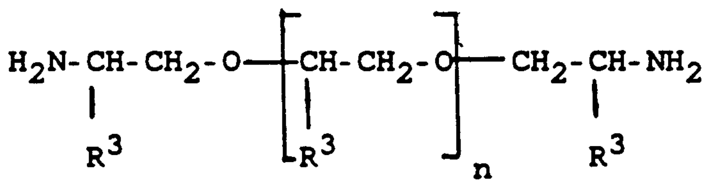

(II)

in der $R^3$ gleich oder verschieden sein kann und H oder eine Alkylgruppe mit 1 bis 6 C-Atomen bedeutet und n eine ganze Zahl zwischen 1 und 50, vorzugsweise zwischen 5 und 35 ist.

Weitere bevorzugte Polyoxyalkylenpolyamine sind solche folgender allgemeiner Formel

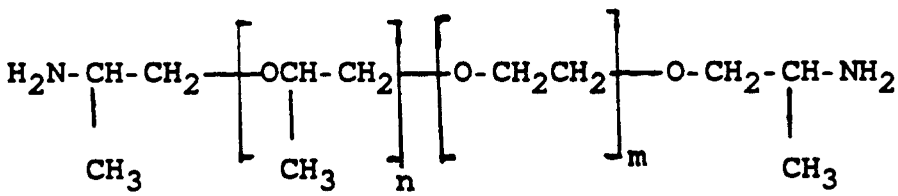

(III)

in der n + m eine ganze Zahl zwischen 1 und 50, vorzugsweise 5 - 35, und m und n jeweils eine ganze Zahl zwischen 1 und 49, vorzugsweise 5 und 30 bedeuten.

Zu nennen sind hier als Polyoxyalkylenpolyamine auch die Triamine folgender allgemeiner Formel

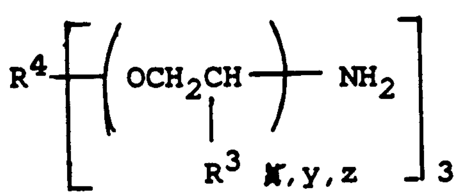

(IV)

wobei $R^4$ der Rest eines dreiwertigen Alkohols, z.B. Glycerin, Trimethylolpropan, Trimethylolethan, Butantriol-(1,2,4) oder Hexantriol-(1,2,6) ist, $R^3$ die oben angegebene Bedeutung und x,y,z die gleiche Bedeutung wie m oder n haben.

Darüber hinaus können als Komponente (c) auch Derivate von Polyoxyalkylenaminen eingesetzt werden, z.B. solche, die durch Reaktion der oben genannten Polyoxyalkylenpolyamine mit Acrylnitril und anschließender Hydrierung hergestellt werden, und die z.B. folgende Formel besitzen können:

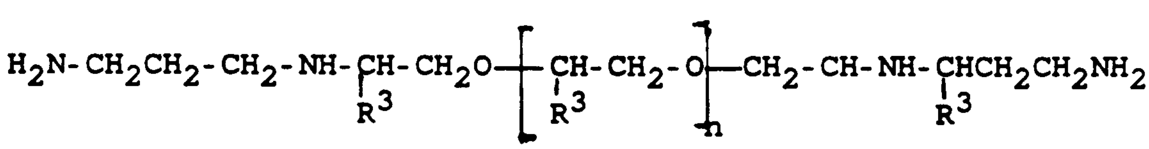

(V)

wobei n und $R^3$ die obige Bedeutung haben. Auch Gemische aus verschiedenen Polyoxyalkylenaminen können verwendet werden.

Als gegebenenfalls mitzuverwendende NH- und/oder OH-reaktive Verbindungen (d) kommen beispielsweise Polyole, Polyamine und/oder (Poly)amino(poly)ole in Betracht.

Geeignete Polyole sind alle Polyhydroxylverbindungen, insbesondere Di- oder Triole mit aliphatisch oder cycloalipahtisch gebundenen Hydroxylgruppen, die auch Ethergruppen aufweisen können. Beispiele hierfür sind: Ethylenglykol, Propylenglykol-(1,2) und -(1,3), Butylenglykol-(1,4) und -(2,3), Di-ß-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis-(4-hydroxycyclohexyl)-propan, 2,2-Bis-(4,(ß-hydroxyethoxy)phenyl)-propan, 2-Methyl-1,3-propandiol, Glycerin, Trimethylolethan, Trimethylolpropan, Hexantriol-(1,2,6), Butantriol-(1,2,4), Tris-(ß-hydroxyethyl)-isocyanurat, Pentaerythrit und deren Hydroxyalkylierungsprodukte, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z.B. $\epsilon$-Caprolacton oder Hydroxycarbonsäuren, wie z.B. Hydroxypivalinsäure, $\omega$-Hydroxydecansäure, $\omega$-Hydroxycapronsäure, Thioglykolsäure erhalten werden, können eingesetzt werden.

Die Polyamine sind polyfunktionell und enthalten mindestens zwei, vorzugsweise 2 bis 10 Aminogruppen, wovon vorzugsweise mindestens zwei primäre Aminogruppen sind. Vorzugsweise kommen hierfür Polyamine der allgemeinen Formel (VI) in Betracht

$H_2N\text{-}(R^5\text{-}NH)_n\text{-}R^5\text{-}NH_2$ (VI )

in der $R^5$ einen zweiwertigen, nichtaromatischen Kohlenwasserstoffrest mit 2 bis 18 C-Atomen, vorzugsweise einen verzweigten oder unverzweigten Alkylenrest mit 2 bis 10 C-Atomen, insbesondere mit 2 bis 6 C-Atomen, oder einen Cycloalkylenrest mit 5 bis 12 C-Atomen, vorzugsweise 6 bis 10 C-Atomen, oder einen Aralkylenrest mit 7 bis 12 C-Atomen, vorzugsweise 8 bis 10 C-Atomen, darstellt und n = 0 oder eine ganze Zahl von 1 bis 6, vorzugsweise 1 bis 4 ist.

Beispiele hierfür sind: Ethylendiamin, Propylendiamin, 2-Methylpentamethylendiamin, Hexamethylendiamin, Trimethylhexamethylendiamin, Neopentyldiamin, Octamethylendiamin, Triacetonidiamin, Dioxadecandiamin und höhere Homologe, cycloaliphatische Diamine wie 1,2-, 1,3-oder 1,4-Cyclohexandiamin; 4,4′-Methylen-bis-cyclohexylamin, 4,4-Isopropylen-bis-cyclohexylamin, Isophorondiamin, Tricyclododecenyldiamin, Menthandiamin, 4,4′-diamino-3,3′-dimethyl-di-cyclohexylmethan, 3-Aminomethyl-1-(3-aminopropyl-1-methyl)-4-methylcyclohexan, m-Xylylendiamin, N-Methylethylendiamin, Hydroxyethylaminoethylamin, -propylamin, N-Aminoethylpiperazin, 2-Aminoethylpiperazin, N,N-dimethylethylendiamin, -propylendiamin, aliphatische Polyamine wie Diethylentriamin, Triethylentetramin, Tetraethylenpentamin, Pentaethylenhexamin, Iminobispropylamin, Methyliminobispropylamin, Bis(hexamethylen)triamin, Tetrapropylenpentamin.

Als Polyamine können auch solche mit zusätzlichen Amidgruppen verwendet werden, wie sie beispielsweise durch Kondensation von di-primären Aminen mit Dicarbonsäuren, wie Adipinsäure, Sebacinsäure oder dimerer Fettsäure erhalten werden. Auch andere Amin-Addukte sind hierfür einsetzbar, z.B. Imide.

Selbstverständlich können auch Mischungen der verschiedenen Polyamine Verwendung finden.

Weitere geeignete Polyamine sind beispielsweise in der DE-A-37 26 497 beschrieben, auf die hier Bezug genommen wird.

Als (Poly)amino(poly)ole, die neben primären und/oder sekundären Aminogruppen auch mindestens eine OH-Gruppe enthalten, können beispielsweise Verbindungen der allgemeinen Formel (VII) Verwendung finden:

$A\text{-}(R^5NH)_n\text{-}R^5\text{-}B$ (VII)

worin A, B = $NH_2$ oder OH ist, wobei jedoch mindestens einer dieser beiden Reste für OH steht und $R^5$ sowie n die Bedeutung in Formel (VI) haben.

Besonders geeignete Vertreter hierfür sind Hydroxyethyldiethylentriamin oder Bishydroxyethyldiethylentriamin. Weiterhin kommen Monoethanolamin, Diethanolamin, Aminoethylethanolamin, N-(2-hydroxypropyl)-ethylendiamin, Mono-, Di-(n oder iso)propanolamin, Ethylenglycol-bis-propylamin, Neopentanolamin, Methylethanolamin, 2-(2-Aminoethoxy)-ethanol, 3-Amino-propyl-trialkoxysilan (alkoxy = methoxy-, ethoxy-, tridecycloxy-), 2-Amino-2-hydroxy-methyl-1,3-propandiol, und ähnliche. Ebenfalls können hier Umsetzungsprodukte von Polyaminen oder Polyaminoalkoholen wie z.B. Ethylendiamin, Propylendiamin, Hexamethylendiamin, Trimethylhexamethylendiamin, m-Xylylendiamin mit Epoxiden oder 1,3-Dioxolan-2-onen eingesetzt werden, wie z.B. Propylenoxid, Styroloxid, Hexenoxid oder Glycidylethern wie Phenylglycidylether, Ethylhexyglycidylether, Butylglycidylether oder mit Glycidylestern wie "Cardura E".

Bezüglich weiterer (Poly)amino(poly)ole sei hier auf die bereits genannte DE-A-37 26 497 verwiesen.

Die Herstellung der erfindungsgemäßen Härtungskomponente (A) erfolgt nach an sich bekannten Methoden, durch Umsatz der Verbindungen (a) bis (c) sowie gegebenenfalls (d). Vorzugsweise läßt man dabei zunächst das Polyisocyanat (a) mit dem CH-aciden Alkylester (b) reagieren und setzt dann die verbleibenden Isocyanatgruppen mit den Polyoxyalkylenaminen (c) und gegebenenfalls den Polyolen, Polyaminen und/oder (Poly)amino (poly)olen (d) um.

Die Reaktion zwischen dem Polyisocyanat und dem CH-aciden Alkylester wird bevorzugt in Anwesenheit von Lösungsmitteln, die keine aktiven Wasserstoffatome enthalten und vorzugsweise unter Stickstoff und unter Ausschluß von Feuchtigkeit durchgeführt. Als Lösungsmittel kommen beispielsweise in Frage: Ether, wie z.B.

Diethylether, Tetrahydrofuran, Dioxan, 1,2-Dimethoxyethan, Diethylenglykoldimethylether; Ketone wie Aceton, Methylethylketon, Cyclohexanon; (cyclo)aliphatische und/oder aromatische Kohlenwasserstoffe, wie Hexan, Heptan, Benzol, Toluol, die verschiedenen Xylole oder Gemische diese Kohlenwasserstoffe; Halogenkohlenwasserstoffe wie Methylenchlorid, Dimethylformamid und N-Methylpyrrolidon.

Vorzugsweise erfolgt diese Umsetzung in Gegenwart von basischen Verbindungen, wie Alkoholaten, insbesondere Alkalialkoholaten, wie Lithiumbutylat, Natrium- oder Kaliummethylat, Natrium- oder Kaliumphenolat udgl. oder metallischem Natrium, in Mengen von ca. 0,1 bis 5, vorzugsweise 0,1 bis 0,5 Gew.-%, bezogen auf das Gesamtgewicht der Reaktionskomponenten.

Polyisocyanat und CH-acider Alkylester werden in solchen Mengen verwendet, daß auf n Mol Isocyanatgruppen mindestens (n-1) Mol CH-acider Alkylester kommen; vorzugsweise wird ein Überschuß von 0,1 bis 0,5 Mol, d.h. (n-1) + 0,1-0,5 Mol CH-acider Alkylester eingesetzt.

Die Reaktion kann dabei so durchgeführt werden, daß man das Polyisocyanat, gegebenenfalls zusammen mit dem Lösungsmittel vorlegt und den CH-aciden Alkylester zusammen mit dem Katalysator bevorzugt bei Raumtemperatur kontinuierlich zugibt. Sobald der Isocyanatgehalt der Reaktionsmischung so weit abgesunken ist, daß theoretisch der gesamte CH-acide Alkylester mit dem Polyisocyanat reagiert hat, erfolgt sofort die weitere Umsetzung mit dem Polyoxyalkylenamin.

Das Additionsprodukt aus (a) und (b) und das Polyoxyalkylenamin (c) werden hierbei zweckmäßigerweise in solchen Mengen eingesetzt, daß auf eine Isocyanatgruppe eine Aminogruppe kommt. Setzt man das Polyoxyalkylenamin im Gemisch mit Polyolen oder Polyaminen oder (Poly)amino(poly)olen ein, so kommen auf eine Isocyanatgruppe in der Regel insgesamt ein Äquivalent Amino- und Hydroxylgruppe.

Das Polyoxyalkylenamin wird, gegebenenfalls mit dem Polyol, Polyamin und/oder (Poly)amino(poly)ol zusammen mit einem der oben genannten aprotischen Lösemittel vorgelegt und das Additionsprodukt so schnell zugegeben, daß die Reaktionstemperatur 100 ° C, vorzugsweise 60 ° C, nicht überschreitet. Man läßt so lange weiterreagieren bis der Isocyanatgehalt auf unter 0,5 Gew.-%, vorzugsweise 0,2 Gew.-% abgesunken ist.

Zur Beschleunigung der Reaktion können dem Reaktionsgemisch auch Katalysatoren zugesetzt werden. Als Katalysatoren kommen z.B. organische Metallverbindungen, vorzugsweise Zinn(II)salze von Carbonsäuren, wie Zinn(II)laurat oder Dialkyl-Zinn-Salze von Carbonsäuren, wie Dibutylzinndilaurat, Zinnoctoat etc. infrage.

Das CH-Äquivalentgewicht der erfindungsgemäßen Härtungskomponente (A) liegt zumeist zwischen 100 und 2000, vorzugsweise 300 bis 1000 und das Molekulargewicht (Gewichtsmittel $\overline{M}_w$, bestimmt mittels Gelchromatographie; Polystyrolstandard) liegt zumeist zwischen 500 und 50.000, vorzugsweise 2000 und 10.000.

Das Polyoxyalkylenamin (c) sowie die eventuelle NH-aktive Verbindung (d) sind über Harnstoffgruppen, die durch Reaktion mit den Isocyanatgruppen des Polyisocyanats (a) oder dessen Addukts mit (b) entstehen, in der Härtungskomponente (A) gebunden. Im statistischen Mittel enthält die Härtungskomponente (A) pro Molekül mindestens zwei, vorzugsweise zwei bis acht und insbesondere zwei bis sechs Estergruppen. Der Gehalt an Struktureinheiten gemäß (a) bis (d) in der Härtungskomponente (A) liegt im allgemeinen bei 5 bis 70, vorzugsweise 10 bis 60 Gew.-% (a), 4 bis 70, vorzugsweise 8 bis 63 Gew.-% (b), 3 bis 90, vorzugsweise 6 bis 60 Gew.-% (c) und 0 bis 80, vorzugsweise 3 bis 40 Gew.-% (d).

Die Erfindung betrifft weiterhin härtbare Mischungen auf Basis der Härtungskomponente (A), eines Bindemittels (B), das zur Ester- und/oder Amidbildung befähigte Gruppen enthält, gegebenenfalls einem Verdünnungsmittel (C), sowie gegebenenfalls Zusatzstoffen (D).

Das Molekulargewicht (Gewichtsmittel $\overline{M}_w$ von (B), bestimmt mittels Gelchromatographie (Polystyrolstandard), liegt üblicherweise im Bereich von etwa 300 bis 50000, vorzugsweise etwa 1000 bis 20000. Vorzugsweise besitzten diese Bindemittel (B) also harzartigen Charakter. In Sonderfällen kann das Molekulargewicht 100000 oder mehr betragen. Die Bindemittel (B) können gegebenenfalls auch C = C-Doppelbindungen enthalten, wobei das C = C-Equivalentgewicht vorzugsweise 500 bis 1500 beträgt.

Als Polymere für (B) kommen Polymerisate, Polykondensate oder Polyadditionsverbindungen in Betracht. Beispiele für Bindemittel (B) sind OH-gruppenhaltige Kunstharze (Poyole), wie Polyetherpolyole, Polyacetalpolyole, Polyesteramidpolyole, Epoxidharzpolyole oder deren Umsetzungsprodukte mit $CO_2$, Phenolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polyesterpolyole oder Acrylatharzpolyole. Weiterhin kommen hier OH-haltige Phenol-, Harnstoff- oder Melaminharze in Frage. Derartige Polyole, die auch in Mischung eingesetzt werden können, sind beispielsweise in der DE-Offenlegungsschrift 31 24 784 sowie in den EP-Offenlegungsschriften 123 880 und 189 728 beschrieben.

Bevorzugt sind Polyesterpolyole, Polyurethanpolyole, Polyetherpolyole und Acrylatharzpolyole.

Die Polyesterpolyole können beispielsweise hergestellt werden durch Umsetzung von mehrwertigen Alkoholen oder von Epoxyverbindungen, z.B. Fettsäureglycidylestern, mit mehrwertigen, vorzugsweise zweiwertigen Carbonsäuren oder Carbonsäureanhydriden oder Carbonsäureestern von niedrigen Alkoholen. Geeignete Alkohole sind z.B. Ethylenglykol, Propylenglykol, Neopentylglykol, Glycerin, Trimethylolpropan, Pentaerithrit, Diethylenglykol, Polyethylenglykol oder Dipropylenglykol. Geeignete Carbonsäuren sind z.B. Bernsteinsäure, Bernsteinsäureanhydrid, Adipinsäure, Dodecandicarbonsäure, Azeleinsäure, Sebacinsäure, die verschiedenen Phthalsäuren und deren Anhydride, Terephthalsäuredimethylester, Maleinsäure, Maleinsäureanhydrid, dimere und trimere Fettsäuren. Weiterhin sind hier auch Polyesterpolyole zu nennen, die durch Ringöffnungspolymerisation eines cyclischen Esters, wie Caprolacton, oder Butyrolacton erhalten werden.

Die urethanmodifizierten Polyole können durch Umsetzung einer überschüssigen Menge der vorstehend genannten Polyesterpolyole mit einem organischen Polyisocyanat hergestellt werden.

Beispiele für Polyetherpolyole sind solche, die durch Additionspolymerisation von Alkylenoxiden (z.B. Ethylenoxid, Propylenoxid, Tetrahydrofuran) mit niedermolekularen Polyolen mit 2 bis 8 C-Atomen und einem Molekulargewicht von etwa 50 - 300 (z.B. Ethylenglykol, Diethylenglykol, Propylenglykol, Dipropylenglykol, Glycerin, Trimethylolpropan, 1,2,6-Hexantriol, Pentaerythrit) erhalten werden.

Die weiterhin bevorzugt eingesetzten Acrylatharzpolyole sind beispielsweise durch Copolymerisation von Hydroxyestern olefinisch ungesättigter Carbonsäuren, wie Hydroxialkylacrylate, mit anderen polymerisierbaren olefinisch ungesättigten Verbindungen, wie Methacrylsäure und deren Derivaten, Vinylestern oder Vinylaromaten erhältlich.

Für die Formulierung von kathodisch abscheidbaren ETL-Zusammensetzungen wird die erfindungsgemäße Härtungskomponente zusammen mit kationischen Harzen, die zur Amid- und/oder Esterbildung mit Carbonsäuren befähigt sind, eingesetzt.

Kunstharze (B), die Hydroxyl- und Aminogruppen enthalten, sind beispielsweise im Journal of Coatings Technology, Vol. 54, No. 686, (1982), S. 33 bis 41 ("Polymer Compositions for Cationic Electrodepositable Coatings") beschrieben, auf das Bezug genommen wird. Erwähnt seien hier Polymerisate aus $\alpha,\beta$-olefinisch ungesättigten Monomeren, die Hydroxy-und/oder Aminogruppen enthalten. Die Einführung der Hydroxy- und/oder Aminogruppen kann durch Verwendung entsprechender Monomere bei der Copolymerisation, z.B. durch Hydroxy- oder Aminoester von $\alpha,\beta$-olefinisch ungesättigten Carbonsäuren, wie Hydroxyalkyl(meth)-acrylate oder Aminoalkyl(meth)acrylate, erfolgen oder durch polymeranaloge Umsetzung mit Di- oder Polyaminen, z.B. mit N,N-Dimethyl-aminopropylamin, unter Ausbildung von Amid-, Amino- oder Urethangruppen. Eine weitere Gruppe sind die aus dimerisierten Fettsäuren und Polyaminen erhältlichen Polyaminopolyamide oder die beispielsweise durch Umsetzung von Epoxydharzen mit primären oder sekundären Aminen zugänglichen Aminopolyetherpolyole, die sich besonders eignen. Diese sind beispielsweise durch Umsetzung von primären oder sekundären Aminen mit einem Polyglycidylether zugänglich. Dabei sollen so viele Epoxidgruppen vorhanden sein, daß alle Aminogruppen in tertiäre Aminogruppen umgewandelt werden. Die bevorzugten Polyglycidylether sind Polyglycidylether von Bisphenol A und ähnlichen Polyphenolen. Man kann sie beispielsweise herstellen, indem man ein Polyphenol mit einem Epihalogenhydrin, wie Epichlorhydrin in Gegenwart von Alkali verethert.

Statt der Polyglycidylether lassen sich auch deren Umsetzungsprodukte mit $CO_2$ einsetzen. Diese Produkte enthalten cyclische Carbonatgruppen, die mit primären Aminen unter Ausbildung von Urethanen eingesetzt werden können. Je nach den Molverhältnissen von Polyglycidylether und $CO_2$ erhält man bei der Reaktion mit $CO_2$ Verbindungen, die keine Epoxidgruppen mehr enthalten, oder Verbindungen, die Epoxidgruppen und cyclische Carbonatgruppen aufweisen.

Derartige cyclische Carbonatgruppen lassen sich auch über entsprechende Monomere, welche diese Gruppen enthalten, in die Polymerenkette einführen; siehe hierzu die DE-Patentanmeldung P 36 44 372.7 und P 36 44 373. Die Umsetzung derartiger cyclischer Carbonatgruppen enthaltender Polymere mit Aminen unter Bildung von sogenannten Aminourethanen ist beispielsweise in den EP-Patentanmeldungen 87.101.797.6 und 87.107.309.4 sowie in der DE-Patentanmeldung P 36 44 370.0 beschrieben.

Die Polyglycidylether der Polyphenole oder deren Umsetzungsprodukte mit $CO_2$ können als solche mit den Aminen zur Reaktion gebracht werden, jedoch ist es häufig vorteilhaft, einen Teil der reaktionsfähigen Epoxidgruppen mit einem modifizierenden Material umzusetzen, um die Filmeigenschaften zu verbessern. Besonders bevorzugt ist die Umsetzung der Epoxidgruppen mit einem Polyol oder einer Polycarbonsäure.

Als Polyole können eingesetzt werden z.B. die oben beschriebenen Polyesterpolyole, Polyetherpolyole oder Polyhydroxyacrylate.

Zu den Polycarbonsäuren gelangt man durch Umsetzung der vorstehend beschriebenen Polyole mit einem Überschuß an Polycarbonsäuren oder bevorzugt deren Anhydriden. Sie können ebenfalls erhalten

werden durch Veresterung von Polycarbonsäuren oder deren Anhydriden mit niedermolekularen Polyolen wie Ethylenglykol, Propylenglykol, usw. Statt der niedermolekularen Polyole können auch niedermolekulare Polyetherpolyamine oder Polyamine, wie z.B. Hexamethylendiamin, eingesetzt werden.

Die Modifizierung der Aminopolyetherpolyole mit Polyolen oder Polycarbonsäuren erfolgt bevorzugt vor der Umsetzung der Polyglycidylether oder deren Umsetzungsprodukte mit $CO_2$ mit den primären oder sekundären Aminen. Es ist jedoch auch möglich, das Verhältnis des als Ausgangsmaterial verwendeten Polyglycidylethers zu den Aminen so zu wählen, daß ein Überschuß an Epoxygruppen vorhanden ist. Die Epoxygruppen können dann mit den Polycarbonsäuren oder Polyolen umgesetzt werden. Weiterhin ist es möglich, das Endprodukt, das keine Epoxidgruppen mehr enthält, durch Reaktion der Hydroxylgruppen mit Glycidylethern weiter zu modifizieren.

Bei der Verwendung in Elektrotauchlacken ist die Anzahl an basischen Gruppen in dem Bindemittel (B) so zu wählen, daß eine ausreichende Wasserverdünnbarkeit im sauren Milieu gewährleistet ist.

Das Verhältnis von Härter (A) und Bindemittel (B) richtet sich in den nichtselbsthärtenden Systemen (sog. 2-Komponenten-Lacken), die erfindungsgemäß bevorzugt sind, nach der gewünschten Vernetzungsdichte und hängt von der Anzahl der Estergruppen in (A) und der Anzahl der Hydroxyl-und/oder Aminogruppen in (B) ab. Im allgemeinen liegt dieses Verhältnis so, daß die Zahl der Estergruppen in (A) 0,2 bis 2, vorzugsweise 0,5 bis 2 pro Hydroxyl- und/oder primärer bzw. sekundärer Aminogruppen im Harz beträgt.

Bei der bevorzugten Verwendung als flüssige Lackzubereitung sind die üblichen Verdünnungsmittel (C) vorhanden. Als solche kommen beispielsweise die bekannten organischen Lösungsmittel in Frage wie: halogenierte Kohlenwasserstoffe, Ether, wie Diethylether, 1,2-Dimethyloxyethan, Tetrahydrofuran oder Dioxan; Ketone, wie beispielsweise Aceton, Methylethylketon, Methylisobutylketon, Cyclohexanon und ähnliche; Alkohole, wie Methanol, Ethanol, 2-Butoxyethanol, Propanol, Isopropanol, 2-Methoxy-1-propanol, Butanol und Benzylalkohol; Ester wie Butylacetat, Ethylglykolacetat, Methoxypropylacetat; (cyclo)aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180 °C, wie ®Solvesso. Die Lösemittel können dabei einzeln oder im Gemisch eingesetzt werden. Auch Gemische mit Wasser sind möglich.

Im Falle der bevorzugten Verwendung von Wasser als Verdünnungsmittel (C), beispielsweise bei Elektrotauchlacken, enthalten die Bindemittel (B) kationische, anionische oder nicht-ionogene wasserlöslich machende Gruppen. Beispiele für kationische Gruppen sind Ammonium-, Phosphonium- und Sulfoniumkationen und für anionische Gruppen Ammoniumslaze von Carbonsäuren. Als nicht-ionogene Gruppen kommen zum Beispiel Oxethylate und Oxpropylate in Frage.

Speziell zur Herstellung von kathodisch abscheidbaren Elektrotauchlacken werden die zweckmäßigerweise in organischen Lösungsmitteln vorliegenden, vorzugsweise Aminogruppen-haltigen Kunstharze (B) und Härter (A) vermischt, und die Aminogruppen ganz oder teilweise durch Umsetzung mit einer wasserlöslichen Säure, z.B.

Ameisensäure, Essigsäure, Milchsäure, Phosphorsäure etc. neutralisiert, bevor mit Wasser verdünnt wird. Die Menge der Säure hängt im Einzelfall von den Eigenschaften des verwendeten Harzes ab und wird im allgemeinen nur so weit durchgeführt, daß das Harz solubilisiert oder dispergiert wird.

Wäßrige Zubereitungen, die einen besonders niedrigen Gehalt an flüchtigen, organischen Lösungsmitteln besitzen, erhält man, wie beispielsweise in der DE-A-36 02 980 beschrieben, durch Abdestillation des in den Bindemitteln von der Herstellung oder Lösung enthaltenen Lösungsmittels. Bevorzugt wird dieser Verfahrensschritt unter vermindertem Druck durchgeführt.

Als übliche Zusatzstoffe im Sinne von (D), die eventuell in der erfindungsgemäßen härtbaren Mischung vorhanden sein können, seien hier - in Abhängigkeit von dem jeweiligen Verwendungszweck - die üblichen Lackadditive wie Pigmente (Eisenoxide, Bleioxide, Bleisilikate, Titandioxid, Bariumsulfat, Zinkoxid, Zinksulfid, Phthalocyaninkomplexe etc.), Pigmentpasten, Antioxidatien, (UV-)Stabilisatoren, Verlauf- bzw. Verdickungsmittel, Entschäumer und/oder Netzmittel, Reaktivverdünner, Füllstoffe (Talkum, Glimmer, Kaolin, Kreide, Quarzmehl, Asbestmehl, Schiefermehl, verschiedene Kieselsäuren, Silikate etc.), zusätzliche Härter und zusätzliche härtbare Verbindungen, Katalysatoren udgl. genannt. Diese Additive können der Mischung gegebenenfalls erst unmittelbar vor der Verarbeitung zugegeben werden.

Als Katalysatoren zur Beschleunigung der Härtung eignen sich beispielsweise Salze oder Komplexe von Metallen, wie beispielsweise Salze oder Komplexe von Metallen, wie beispeilsweise Blei, Zink, Eisen, Zinn, Mangan und Wismut.

Bevorzugte Metallkatalysatoren sind dabei Dialkylzinndicarboxylate wie Dibutylzinndilaurat, Dibutylzinndiacetat, weiter Dibutylzinnoxid, Bleioctoat und Bleiacetylacetonat. Die Katalysatormenge beträgt im allgemeinen 0,1 bis 2,0 Gew.-%, vorzugsweise 0,5 bis 2 Gew.-% (bezogen auf die Summe von (A) und (B)). Sie kann je nach der Reaktivität der Verbindungen (A) und (B), der Art des gegebenenfalls vorhandenen

Lösungsmittels, der Wirksamkeit des Katalysators und der beabsichtigten Verfahrensführung variiert werden. Die Metallkatalysatoren können mit den Ausgangsmaterialien direkt vermischt oder getrennt, in einem geeigneten Bindemittel dispergiert, dem Lack zugesetzt werden.

Der Gehalt an (A) und (B) beträgt - sofern die härtbare Mischung als Dispersion vorliegt - im allgemeinen 10 bis 80 Gew.-% vorteilhafterweise 10 bis 40 Gew.-%.

Zur Herstellung der erfindungsgemäßen härtbaren Mischungen werden die Komponenten (A) und (B) sowie gegebenenfalls zusätzlich (C) und (D) gemischt. Bei Komponenten mit niedriger Viskosität kann dies in Substanz erfolgen, wobei gegebenenfalls auf höhere Temperaturen erwärmt wird. Produkte höherer Viskosität werden vor der Mischung in den erwähnten Verdünnungsmitteln gelöst oder dispergiert.

Die Härtung der erfindungsgemäßen Mischungen läuft sehr rasch ab und liefert bei Temperaturen von 120 bis 140 °C und Einbrennzeiten von 20 bis 40 Minuten bereits Überzüge mit guter Härte und guter Lösungsmittelbeständigkeit.

Die erfindungsgemäßen Mischungen können wegen ihrer günstigen Eigenschaften eine vielseitige technische Anwendung finden, z.B. zur Herstellung von Formkörpern (Gießharze), für den Werkzeugbau oder zur Herstellung von Überzügen und/oder Zwischenbeschichtungen auf vielerlei Substraten, z.B. auf solchen organischer oder anorganischer Natur, wie Holz, Holzfaserstoffe (Holzversiegelung), Textilien natürlicher oder synthetischer Herkunft, Kunststoffen, Glas, Keramik, Baustoffen, wie Beton, Faserplatten, Kunststeine, insbesondere jedoch auf Metall, wie Eisen, Aluminium, Kupfer udgl.. Die Metalloberflächen, insbesondere bei Eisen, können ggfs. durch Verzinken, Phosphatieren, Zinkphosphatieren etc. grundiert sein. Weiterhin können die erfindungsgemäßen Mischungen als Bestandteile von Klebern, Kitten, Laminierharzen, Kunstharzzementen und insbesondere als Bestandteile von Anstrichmitteln und Lacken zum Beschichten von Industriegegenständen, Haushaltgeräten, Möbeln sowie im Bauwesen, wie z.B. Kühlgeräten, Waschmaschinen, Elektrogeräten, Fenstern, Türen, eingesetzt werden. Das Aufbringen kann beispielsweise durch Streichen, Sprühen, Tauchen, elektrostabile Beschichtung udgl. erfolgen. Im Falle von elektrisch leitenden Substraten ist die elektrolytische Abscheidung bevorzugt.

Ein bevorzugtes Anwendungsgebiet für die erfindungsgemäßen Mischungen sind die Lackzubereitungen, insbesondere Elektrotauchlacke.

Die Erfindung wird durch die nachfolgenden Beispiele näher erläutert.

**Beispiel 1**

In ein Gemisch aus 130 g Hexamethylendiisocyanat, 220 g Butylacetat und 0,6 g Natriummethylat wurden innerhalb von 8 Std. kontinuierlich bei Raumtemperatur 200 g Malonsäuredibutylester gegeben. Man ließ solange bei Raumtemperatur weiterreagieren bis der Isocyanatgehalt 4,75 % betrug. Das Reaktionsgemisch wurde dann in eine Mischung aus 100,8 g eines Polyoxypropylentriamins mit einem Äquivalentgewicht von 81 g/mol (®Jeffamin T 403) und 0,4 g DBTL in 67,6 g Butylacetat gegeben. Anschließend erwärmte man auf 80 °C bis der Isocyanatgehalt unter 0,1 % abgesunken war. Nach der Filtration erhielt man eine klare hellgelb gefärbte Harzlösung mit einem Festkörpergehalt von 50 % und einer Viskosität von 200 mPas.

**Vergleichsbeispiel A**

In ein Gemisch aus 130 g Hexamethylendiisocyanat, 220 g Butylacetat und 0,6 g Natriummethylat wurden innerhalb von 8 Std. kontinuierlich bei Raumtemperatur 200 g Malonsäuredibutylester gegeben. Man ließ solange bei Raumtemperatur weiterreagieren, bis der Isocyanatgehalt 4,75 % betrug. Das Reaktionsgemisch wurde dann in eine Mischung aus 21,4 g Diethylentriamin und 0,4 g DBTL in 14,9 g Butylacetat gegeben und solange auf 80 °C erwärmt, bis der Isocyanatgehalt unter 0,1 % war. Man erhielt eine trübe Harzlösung, aus der ein Teil des Reaktionsproduktes ausgefallen war. Auch durch Filtration ließ sich keine klare Harzlösung herstellen.

**Beispiel 2**

a) Herstellung des Härters (A)

In ein Gemisch aus 315 g Trimethylhexandiisocyanat, 369 g Diethylenglykoldimethylether und 0,75 g Natriummethylat wurden innerhalb von 1,5 Std. kontinuierlich bei Raumtemperatur 238 g Malonsäuredimethylester gegeben. Man ließ solange bei Raumtemperatur weiterreagieren, bis der Isocyanatgehalt 5,5 % betrug. Das Reaktionsgemisch wurde dann so schnell in eine Mischung aus 242,4 g eines Polyoxypropylendiamins mit einem Äquivalentgewicht von 101 g/mol (®Jeffamin d 400) und 162 g Diethylenglykoldimethylether gegeben, daß die Reaktionstemperatur 30 ° C nicht überschritt. Anschließend erwärmte man solange auf 60 ° C, bis der Isocyanatgehalt bei unter 0,1 % lag.

b) Herstellung eines kationischen Bindemittels (B)

Es wurde nach bekannten Methoden (z.B. wie in der DE-Offenlegungsschrift 3417441 beschrieben) ein Aminopolyetherpolyol aus

| | |
|---|---|
| 52,6 % | eines Bisphenol-A-Epoxidharzes mit einem Epoxidäquivalentgewicht von 480 |
| 10,3 % | eines Epoxid-Amin-Adduktes aus 11,8 % Diethylentriamin, 66,4 % 2-Ethylhexylglycidylether und 21,8 % eines Bisphenol-A-Epoxidharzes und einem Äquivalentgewicht von 183 |
| 22,6% | eines Bisphenol-A-Epoxidharzes mit einem Epoxidäquivalent von 183 |
| 3,8 % | 2-Ethylhexylamin |
| 7,5 % | Diethanolamin |
| 3,2 % | Diethylaminopropylamin |

hergestellt.

Das Produkt war 65 %ig in 1-Methoxypropanol-2 gelöst und hatte eine Aminzahl von 72 mg KOH/g Lösung.

c) Elektrotauchlackierung und Prüfung:

36 g des Bindemittels und 20 g des Härters wurden mit 5 g 5 n-Ameisensäure und 272 g vollentsalztem Wasser verdünnt. Das Lackbad wurde 24 Std. gerührt und wies dann folgende Kenndaten auf:

| | |
|---|---|
| Festkörpergehalt | 10 Gew.-% |
| pH-Wert | 5 |
| Badleitfähigkeit | 1.800 $\mu$ S $cm^{-1}$ |
| MEQ-Wert | 17. |

Auf phosphatiertem, als Kathode geschaltetem Stahlblech erhielt man nach Abscheidung (25 ° C Badtemperatur; 1 min; 150 V) und Härtung (30 min, 120 ° C) einen glatten Überzug mit einer Schichtdicke von 14 $\mu$m und einer Lösungsmittelbeständigkeit von mehr als 500 Doppelhüben mit Methylisobutylketon.

**Beispiel 3**

a) Herstellung des Härters (A)

In ein Gemisch aus 315 g Trimethylhexandiisocyanat, 369 g Diethylenglykoldimethylether und 0,78 g Natriummethylat wurden innerhalb von 1,5 Std. kontinuierlich bei Raumtemperatur 238 g Malonsäuredimethylester gegeben. Man ließ solange bei Raumtemperatur weiterreagieren, bis der Isocyanatgehalt 5,5 % betrug. Das Reaktionsgemisch wurde dann so schnell in eine Mischung aus 194,4 g Jeffamin T 403 und 130 g Diethylenglykoldimethylether gegeben, daß die Reaktionstemperatur 30 ° C nicht überstieg. Anschließend erwärmte man solange auf 60 ° C, bis der Isocyanatgehalt unter 0, 1 % war.

b) Elektrotauchlackierung und Prüfung:

36 g des Bindemittels aus Beispiel 2 und 20 g des Härters gemäß a) wurden mit 5 g 5 n-Ameisensäure und 27,2 g vollentsalztem Wasser verdünnt. Das Lackbad wurde 24 Std. gerührt und wies dann folgende Kenndaten auf:

| | |
|---|---|
| Festkörpergehalt | 10 Gew.-% |
| pH-Wert | 6 |
| Badleitfähigkeit | 1.720 $\mu$ S $cm^{-1}$ |
| MEQ-Wert | 18. |

Auf phosphatiertem, als Kathode geschaltetem Stahlblech erhielt man nach Abscheidung (25 °C Badtemperatur; 1 min; 150 V) und Härtung (30 min., 120 °C) einen glatten Überzug mit einer Schichtdicke von 16 µm und einer Lösungsmittelbeständigkeit von mehr als 500 Doppelhüben mit Methylisobutylketon.

**Beispiel 4**

a) Herstellung des Härters (A)

In ein Gemisch aus 342 g 3-Isocyanatomethyl-3,5,5-trimethyl-cyclohexanisocyanat, 495 g Diethylenglykoldimethylether und 1,2 g Natriummethylat wurden innerhalb von 8 Std. kontinuierlich bei Raumtemperatur 400 g Malonsäuredibutylester gegeben. Man ließ solange bei Raumtemperatur weiterreagieren bis der Isocyanatgehalt 4,2 % betrug. Das Reaktionsgemisch wurde dann so schnell in eine Mischung aus 97, 8 g Jeffamin T 403 und 347 g Diethylenglykoldimethylether gegeben, daß die Reaktionstemperatur 30 °C nicht überstieg. Anschließend erwärmte man solange auf 60 °C, bis der Isocyanatgehalt unter 0,1 % war.

b) Elektrotauchlackierung und Prüfung:

36 g des Bindemittels aus Beispiel 2 und 20 g des Härters wurden mit 5 g 5 n-Ameisensäure und 272 g vollentsalztem Wasser verdünnt. Das Lackbad wurde 24 Std. gerührt und wies dann folgende Kenndaten auf:

| | |
|---|---|
| Festkörpergehalt | 10 Gew.-% |
| pH-Wert | 5 |
| Badleitfähigkeit | 1.150 $\mu$ S $cm^{-1}$ |
| MEQ-Wert | 51. |

Auf phosphatiertem, als Kathode geschaltetem Stahlblech erhielt man nach Abscheidung (28 °C Badtemperatur; 1 min; 250 V) und Härtung (30 min., 120 °C) einen glatten Überzug mit einer Schichtdicke von 23 µm und einer Lösungsmittelbeständigkeit von mehr als 500 Doppelhüben mit Methylisobutylketon.

**Vergleichsbeispiel B**

Statt Jeffamin T 403 des Beispieles 4 wurden 42 g Diethylentriamin eingesetzt; nach der gleichen Vorschrift wurde ein wäßriges Lackbad hergestellt. Bereits nach 24 Std. hat sich im Bad ein Niederschlag abgesetzt, der sich zwar aufrühren läßt, aber nach kurzer Zeit wieder ausfällt.

**Beispiel 5**

Zu einem Gemisch aus 333 g 3-Isocyanatomethyl-3,5,5-trimethylcyclohexylisocyanat, 526 g Butylacetat und 0,78 g Natriummethylat wurden innerhalb von 4 Std. bei Raumtemperatur 228 g Malonsäurediethylester zugegeben. Man ließ dann solange bei Raumtemperatur weiterreagieren, bis der Isocyanatgehalt 4,4 % betrug. Das Reaktionsgemisch wurde dann so schnell in eine Mischung aus 600 g eines Polyoxypropylenglykoldiamins mit einem Äquivalentgewicht von 250 g/mol (Jeffamin ED 900) und 289 g Butylacetat gegeben, daß die Reaktionstemperatur 30 °C nicht überstieg. Man ließ solange weiterreagieren, bis der Isocyanatgehalt unter 0,1 % war. Man erhielt eine klare, hellgelbe Lösung mit einem Festkörpergehalt von 60 % und einer Viskosität von 450 mPas.

**Beispiel 6**

Anstelle von Jeffamin ED 900 des Beispieles 5 wurden 242 g eines Polyoxypropylenglykoldiamins mit einem Äquivalentgewicht von 101 g/mol (Jeffamin D 400) in 51 g Butylacetat eingesetzt. Man erhielt eine klare, hellgelb gefärbte Lösung mit einem Festkörpergehalt von 60 % und einer Viskosität von 1.900 mPas.

**Beispiel 7**

a) Herstellung des Härters (A)

In ein Gemisch aus 315 g Trimethylhexandiisocyanat, 0,78 g Natriummethylat und 369 g Butylacetat wurden innerhalb von 3 Std. bei Raumtemperatur kontinuierlich 238 g Malonsäuredimethylester gegeben. Man ließ solange bei Raumtemperatur weiterreagieren, bis der Isocyanatgehalt 5,5 % betrug. Das Reaktionsgemisch wurde dann so schnell in eine Mischung aus 179 g eines Polyoxypropylenglykoldiamins mit einem Äquivalentgewicht von 160 g/mol (Jeffamin ED 600) und 119 g Butylacetat gegeben, daß die Reaktionstemperatur 30 °C nicht überstieg. Man ließ weiterreagieren bis der Isocyanatgehalt unter 0,1 % war. Man erhielt eine klare, hellgelbe Lösung mit einem Festkörpergehalt von 60 % und einer Viskosität von 350 mPas.

b) Herstellung eines Bindemittels (B)

82,14 T einer 50 %igen Lösung eines glycidylgruppenhaltigen Acrylharzes, hergestellt aus Methylmethacrylat, Styrol, 2-Ethylhexylacrylat und Glycidylmethacrylat (Epoxidäquivalentgewicht der Lösung: 560) in 15 T Methoxypropylacetat und 26 T Butylacetat wurden mit 0,5 T Hydrochinonmonomethylether, 8,4 T Acrylsäure, 8,95 T Butylacetat und 0,01 T Tetraethylammoniumbromid versetzt.

Man ließ bei 100 °C reagieren bis eine Säurezahl < 1 erreicht war. Die hellgelbe Lösung hatte einen Festkörpergehalt von 50 % und ein OH-Equivalentgewicht von 860 g/mol sowie ein C = C-Äquivalentgewicht von 860.

c) Herstellung der Beschichtungen:

35,6 g T Härter und 50 T Bindemittel wurden vermischt und mit 35 T einer 20 %igen Lösung von Tetrabutylammoniumfluorid in Butylacetat/Ethanol versetzt. Mit Butylacetat wurde eine Viskosität von 20 s, Auslaufzeit 4, DIN 53211/20 °C eingestellt und das Beschichtungsmaterial mittels eines Aufziehrakels in einer Naßfilmstärke von 100 µm auf Glasplatten aufgebracht und bei Raumtemperatur bzw. bei 60 °C getrocknet. Nach einem Tag zeigten die Beschichtungen eine Pendelhärte von 70 bzw. 95 s und eine Beständigkeit gegen Xylol von mehr als 1 Std. Die Gelzeit des Beschichtungsmaterials betrug ca. 20 Std.

Wurde zu Vergleichszwecken statt des erfindungsgemäßen Härters ein Umsetzungsprodukt aus Malonsäurediethylester und einem Biuretpolyisocyanat 1t. Bsp. 2 der DE-Offenlegungsschrift 23 42 603 eingesetzt, betrug die Gelzeit auch mit der doppelten Katalysatorkonzentration mehr als 24 Std. Die Pendelhärte der bei Raumtemperatur getrockneten Filme lag nach einem Tag nur bei 36 s, eine Xylolbeständigkeit wurde nicht erreicht.

**Patentansprüche**

**Patentansprüche für folgende Vertragsstaaten : AT, BE, DE, FR, GB, IT, NL, SE**

**1.** Härtungskomponente (A) für zur Amid- und/oder Esterbildung befähigte Kunstharze (B), die ein Reaktionsprodukt ist, aus
   (a) einem Polyisocyanat,
   (b) einem CH-aciden Alkylester,
   (c) einem Polyamin und,
   (d) gegebenenfalls weiteren NH- und/oder OH-reaktiven Verbindungen,
   dadurch gekennzeichnet, daß die Verbindung (b) die Formel

   $X\text{-}CHR^2\text{-}CO_2R^1$ (I)

   besitzt, in der X = $CO_2R^1$, CN, $CONH_2$, $CONHR^1$, $CON(R^1)_2$, $COR^1$ oder $NO_2$ bedeutet, wobei $R^1$ ein unverzweigter oder verzweigter Alkylrest mit 1 bis 8 C-Atomen ist,
   und $R^2$ für H oder $R^1$ steht und
   das Polyamin (c) ein Polyoxyalkylenamin mit mindestens zwei Aminogruppen ist.

**2.** Härtungskomponente nach Anspruch 1, dadurch gekennzeichnet, daß das Polyisocyanat (a) Toluylendiisocyanat, Hexamethylendiisocyanat oder Isophorondiisocyanat ist.

**3.** Härtungskomponente nach Anspruch 1 und/oder 2, dadurch gekennzeichnet, daß in der Formel (I) X für $CO_2R^1$ (mit $R^1$ = $(C_1\text{-}C_6)$-Alkyl) oder CN und $R^2$ für H stehen.

**4.** Härtungskomponente nach mindestens einem der Ansprüche 1 bis 3, dadurch gekennzeichnet, daß die

Verbindung (b) Malonsäuredialkylester oder Cyanessigsäurealkylester ist.

**5.** Härtungskomponente nach mindestens einem der Ansprüche 1 bis 4, dadurch gekennzeichnet, daß das Polyoxyalkylenamin (c) die allgemeine Formel (II)

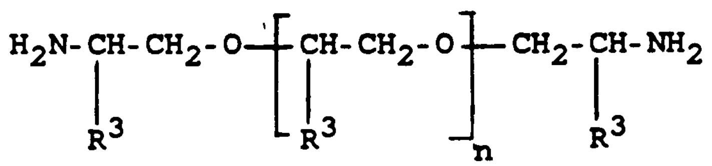

(II)

aufweist, in der $R^3$ gleich oder verschieden sein kann und H oder eine Alkylgruppe mit 1 bis 6 C-Atomen bedeutet und n eine ganze Zahl zwischen 1 und 50 ist.

**6.** Härtungskomponente nach mindestens einem der Ansprüche 1 bis 4, dadurch gekennzeichnet, daß das Polyoxyalkylenamin (c) die allgemeine Formel (III)

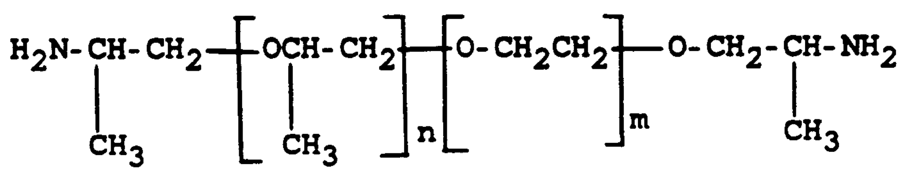

(III)

besitzt, in der n + m eine ganze Zahl zwischen 1 und 50, und m und n jeweils eine ganze Zahl zwischen 1 und 49 bedeuten.

**7.** Härtungskomponente nach mindestens einem der Ansprüche 1 bis 4, dadurch gekennzeichnet, daß das Polyoxyalkylenamin (c) die allgemeine Formel (IV)

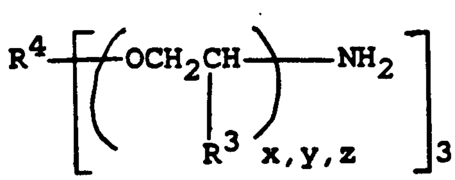

(IV)

aufweist, in der $R^4$ der Rest eines dreiwertigen Alkohols, $R^3$ die obige Bedeutung hat und x,y und z die gleiche Bedeutung wie m oder n haben.

**8.** Verfahren zur Herstellung der Härtungskomponente (A) nach mindestens einem der Ansprüche 1 bis 7, dadurch gekennzeichnet, daß man (a) ein Polyisocyanat, (b) einen CH-aciden Alkylester der Formel (I) gemäß Anspruch 1, (c) ein Polyoxyalkylenamin mit mindestens zwei Aminogruppen sowie (d) gegebenenfalls weitere NH- und/oder OH-reaktive Verbindungen miteinander umsetzt.

**9.** Verfahren nach Anspruch 8, dadurch gekennzeichnet, daß die Umsetzung in Gegenwart von gegenüber Isocyanatgruppen inaktiven Lösungsmitteln und Katalysatoren erfolgt.

**10.** Verfahren nach Anspruch 8 und/oder 9, dadurch gekennzeichnet, daß Polyisocyanat (a) und CH-acider Alkylester (b) in solchen Mengen verwendet werden, daß auf n Mol Isocyanatgruppen mindestens (n-1) Mol CH-acider Alkylester kommen.

**11.** Verfahren nach mindestens einem der Ansprüche 8 bis 10, dadurch gekennzeichnet, daß man zuerst das Polyisocyanat (a) und den CH-aciden Alkylester (b) zur Reaktion bringt, und dann das noch Isocyanatgruppen enthaltende Reaktionsprodukt mit dem Polyoxyalkylenamin (c) sowie gegebenenfalls mit weiternen NH- und/oder OH-reaktiven Verbindungen (d) umsetzt.

**12.** Härtbare Mischungen auf Basis
einer Härtungskomponente (A),
eines Bindemittels (B),
gegebenenfalls einem Verdünnungsmittel (C), sowie
gegebenenfalls Zusatzstoffen (D), dadurch gekennzeichnet, daß als Härtungskomponente die Komponente (A) gemäß einem oder mehreren der Ansprüche 1 bis 7 enthalten ist.

**13.** Härtbare Mischung nach Anspruch 12, dadurch gekennzeichnet, daß das Bindemittel (B) ein mittleres Molekulargewicht ($\overline{M}_w$) von etwa 1000 bis etwa 20000 aufweist und Hydroxyl-Gruppen und/oder Aminogruppen enthält.

**14.** Verwendung der Härtungskomponente gemäß mindestens einem der Ansprüche 1 bis 7 in härtbaren Mischungen, insbesondere Lackzubereitungen.

**15.** Verwendung nach Anspruch 14, dadurch gekennzeichnet, daß es sich bei den Lackzubereitungen um Elektrotauchlacke handelt.

**Patentansprüche für folgenden Vertragsstaat : ES**

**1.** Verfahren zur Herstellung einer Härtungskomponente (A) für zur Amid- und/oder Esterbildung befähigte Kunstharze (B), wobei (a) ein Polyisocyanat, (b) ein CH-acider Alkylester, (C) ein Polyamin und (d) gegebenenfalls weitere NH- und/oder OH-reaktive Verbindungen miteinander umgesetzt werden, dadurch gekennzeichnet, daß die Verbindung (b) die Formel

$X\text{-}CHR^2\text{-}CO_2R^1$ (I)

besitzt, in der X = $CO_2R^1$, CN, $CONH_2$, $CONHR^1$, $CON(R^1)_2$, $COR^1$ oder $NO_2$ bedeutet, wobei $R^1$ ein unverzweigter oder verzweigter Alkylrest mit 1 bis 8 C-Atomen ist,
und $R^2$ für H oder $R^1$ steht und
das Polyamin (c) ein Polyoxyalkylenamin mit mindestens zwei Aminogruppen ist.

**2.** Verfahren nach Anspruch 1, dadurch gekennzeichnet, daß das Polyisocyanat (a) Toluylendiisocyanat, Hexamethylendiisocyanat oder Isophorondiisocyanat ist.

**3.** Verfahren nach Anspruch 1 und/oder 2, dadurch gekennzeichnet, daß in der Formel (I) X für $CO_2R^1$ (mit $R^1$ = ($C_1$-$C_6$)-Alkyl) oder CN und $R^2$ für H stehen.

**4.** Verfahren nach mindestens einem der Ansprüche 1 bis 3, dadurch gekennzeichnet, daß die Verbindung (b) Malonsäuredialkylester oder Cyanessigsäurealkylester ist.

**5.** Verfahren nach mindestens einem der Ansprüche 1 bis 4, dadurch gekennzeichnet, daß das Polyoxyalkylenamin (c) die allgemeine Formel (II)

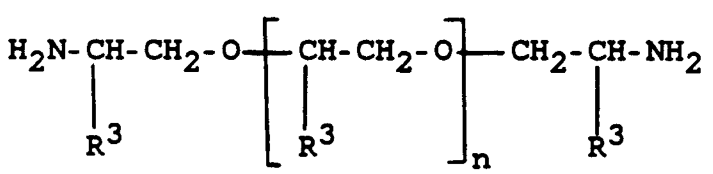

(II)

aufweist, in der $R^3$ gleich oder verschieden sein kann und H oder eine Alkylgruppe mit 1 bis 6 C-Atomen bedeutet und n eine ganze Zahl zwischen 1 und 50 ist.

**6.** Verfahren nach mindestens einem der Ansprüche 1 bis 4, dadurch gekennzeichnet, daß das Polyoxyalkylenamin (c) die allgemeine Formel (III)

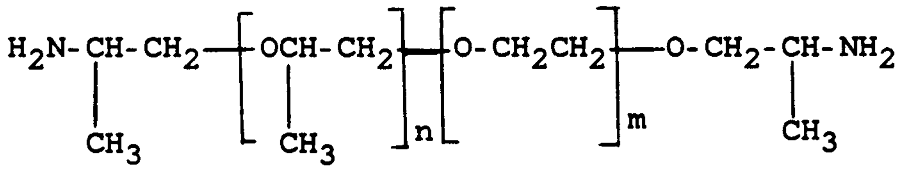 (III)

besitzt, in der n + m eine ganze Zahl zwischen 1 und 50, und m und n jeweils eine ganze Zahl zwischen 1 und 49 bedeuten.

7. Verfahren nach mindestens einem der Ansprüche 1 bis 4, dadurch gekennzeichnet, daß das Polyoxyalkylenamin (c) die allgemeine Formel (IV)

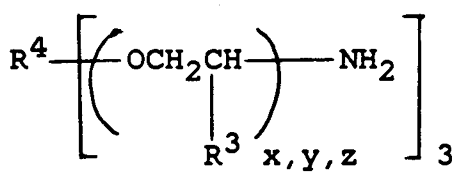 (IV)

aufweist, in der $R^4$ der Rest eines dreiwertigen Alkohols, $R^3$ die obige Bedeutung hat und x,y und z die gleiche Bedeutung wie m oder n haben.

8. Härtbare Mischungen auf Basis
einer Härtungskomponente (A),
eines Bindemittels (B),
gegebenenfalls einem Verdünnungsmittel (C), sowie
gegebenenfalls Zusatzstoffen (D), dadurch gekennzeichnet, daß als Härtungskomponente die Komponente (A), erhalten nach einem oder mehreren der Ansprüche 1 bis 7, enthalten ist.

9. Härtbare Mischung nach Anspruch 8, dadurch gekennzeichnet, daß das Bindemittel (B) ein mittleres Molekulargewicht ($\overline{M}_w$) von etwa 1000 bis etwa 20000 aufweist und Hydroxyl-Gruppen und/oder Aminogruppen enthält.

10. Verwendung der Härtungskomponente gemäß mindestens einem der Ansprüche 1 bis 7 in härtbaren Mischungen, insbesondere Lackzubereitungen.

11. Verwendung nach Anspruch 9, dadurch gekennzeichnet, daß es sich bei den Lackzubereitungen um Elektrotauchlacke handelt.

**Claims**

**Claims for the following Contracting States : AT, BE, DE, FR, GB, IT, NL, SE**

1. A curing component (A) for synthetic resins (B) which are capable of amide and/or ester formation, which is a product of the reaction of
   (a) a polyisocyanate,
   (b) a CH-acidic alkyl ester,
   (c) a polyamine and
   (d) if appropriate further NH- and/or OH-reactive compounds,
wherein compound (b) has the formula

$X\text{-}CHR^2\text{-}CO_2R^1$ (I)

in which X denotes $CO_2R^1$, CN, $CONH_2$, $CONHR^1$, $CON(R^1)_2$, $COR^1$ or $NO_2$, where $R^1$ is a linear or branched alkyl radical having 1 to 8 carbon atoms,
and $R^2$ represents H or $R^1$, and
the polyamine (c) is a polyoxyalkyleneamine, having at least two amino groups.

**2.** A curing component as claimed in claim 1, wherein the polyisocyanate (a) is toluylene diisocyanate, hexamethylene diisocyanate or isophorone diisocyanate.

**3.** A curing component as claimed in claim 1 and/or 2, wherein, in the formula (I), X represents $CO_2R^1$ (where $R^1$ = $(C_1\text{-}C_6)$alkyl) or CN, and $R^2$ represents H.

**4.** A curing component as claimed in at least one of claims 1 to 3, wherein compound (b) is a dialkyl malonate or an alkyl cyanoacetate.

**5.** A curing component as claimed in at least one of claims 1 to 4, wherein the polyoxyalkyleneamine (c) has the formula (II)

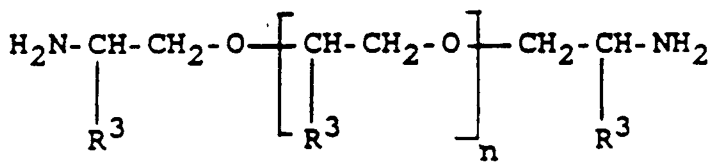

(II)

in which $R^3$ may be identical or different and denotes H or an alkyl group having 1 to 6 carbon atoms, and n is an integer between 1 and 50.

**6.** A curing component as claimed in at least one of claims 1 to 4, wherein the polyoxyalkyleneamine (c) has the formula (III)

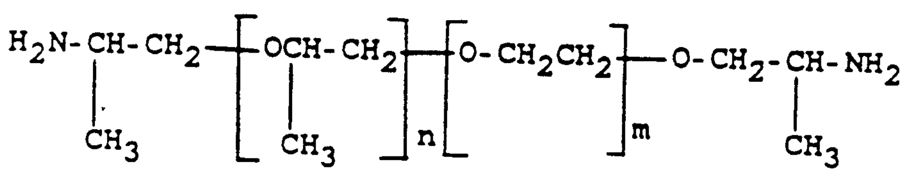

(III)

in which n + m denotes an integer between 1 and 50, and m and n are each an integer between 1 and 49.

**7.** A curing component as claimed in at least one of claims 1 to 4, wherein the polyoxyalkyleneamine (c) has the formula (IV)

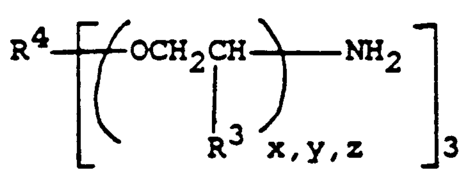

(IV)

in which $R^4$ denotes the radical of a trihydric alcohol, $R^3$ has the above meaning, and x, y and z have the same meaning as m or n.

**8.** A process for the preparation of a curing component (A) as claimed in at least one of claims 1 to 7, which comprises reacting (a) a polyisocyanate, (b) a CH-acidic alkyl ester of the formula (I) as in claim 1, (c) a polyoxyalkyleneamine having at least two amino groups, and (d) if appropriate further NH- and/or OH-reactive compounds with one another.

**9.** The process as claimed in claim 8, wherein the reaction is carried out in the presence of isocyanate group-inactive solvents and catalysts.

**10.** The process as claimed in claim 8 and/or 9, wherein the polyisocyanate (a) and the CH-acidic alkyl ester (b) are used in amounts such that at least (n-1) moles of CH-acidic alkyl ester are present per n moles of isocyanate groups.

**11.** The process as claimed in at least one of claims 8 to 10, wherein the polyisocyanate (a) and the CH-acidic alkyl ester (b) are initially reacted, and the reaction product, still containing isocyanate groups, is then reacted with the polyoxyalkyleneamine (c) and, where appropriate, with further NH- and/or OH-reactive compounds (d).

**12.** A curable mixture based on
a curing component (A),
a binder (B),
where appropriate a diluent (C), and
where appropriate additives (D), wherein the curing component present is component (A) as claimed in one or more of claims 1 to 7.

**13.** A curable mixture as claimed in claim 12, wherein the binder (B) has a mean molecular weight ($\overline{M}_w$) of about 1,000 to about 20,000 and contains hydroxyl groups and/or amino groups.

**14.** The use of a curing component as claimed in at least one of claims 1 to 7 in curable mixtures, in particular paint formulations.

**15.** The use as claimed in claim 14, wherein the paint formulations are electro-dipcoats.

**Claims for the following Contracting State : ES**

**1.** A process for the preparation of a curing component (A) for synthetic resins (B) which are capable of amide and/or ester formation, the process comprising reacting (a) a polyisocyanate, (b) a CH-acidic alkyl ester, (c) a polyamine and (d) if appropriate further NH- and/or OH-reactive compounds, wherein compound (b) has the formula

$X\text{-}CHR^2\text{-}CO_2R^1$ (I)

in which X denotes $CO_2R^1$, CN, $CONH_2$, $CONHR^1$, $CON(R^1)_2$, $COR^1$ or $NO_2$, where $R^1$ is a linear or branched alkyl radical having 1 to 8 carbon atoms,
and $R^2$ represents H or $R^1$, and
the polyamine (c) is a polyoxyalkyleneamine having at least two amino groups.

**2.** A process as claimed in claim 1, wherein the polyisocyanate (a) is toluylene diisocyanate, hexamethylene diisocyanate or isophorone diisocyanate.

**3.** A process as claimed in claim 1 and/or 2, wherein, in the formula (I), X represents $CO_2R^1$ (where $R^1$ = $(C_1\text{-}C_6)$alkyl) or CN, and $R^2$ represents H.

**4.** A process as claimed in at least one of claims 1 to 3, wherein compound (b) is a dialkyl malonate or an alkyl cyanoacetate.

**5.** A process as claimed in at least one of claims 1 to 4, wherein the polyoxyalkyleneamine (c) has the formula (II)

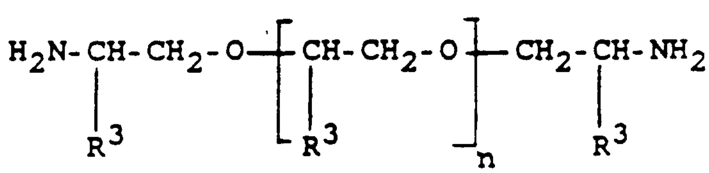

(II)

in which $R^3$ may be identical or different and denotes H or an alkyl group having 1 to 6 carbon atoms,

and n is an integer between 1 and 50.

**6.** A process as claimed in at least one of claims 1 to 4, wherein the polyoxyalkyleneamine (c) has the formula (III)

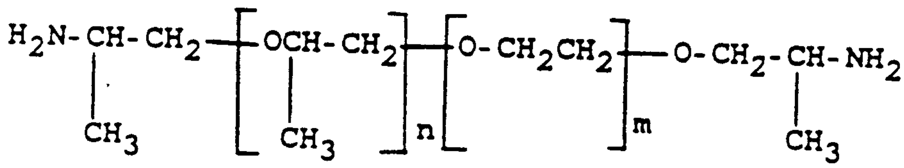

(III)

in which n + m denotes an integer between 1 and 50, and m and n are each an integer between 1 and 49.

**7.** A process as claimed in at least one of claims 1 to 4, wherein the polyoxyalkyleneamine (c) has the formula (IV)

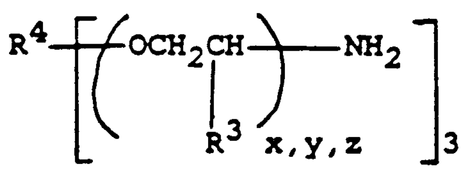

(IV)

in which $R^4$ denotes the radical of a trihydric alcohol, $R^3$ has the above meaning, and x, y and z have the same meaning as m or n.

**8.** A curable mixture based on
a curing component (A),
a binder (B),
where appropriate a diluent (C), and
where appropriate additives (D), wherein the curing component present is component (A) obtained according to one or more of claims 1 to 7.

**9.** A curable mixture as claimed in claim 8, wherein the binder (B) has a mean molecular weight ($\overline{M}_w$) of about 1,000 to about 20,000 and contains hydroxyl groups and/or amino groups.

**10.** The use of a curing component as claimed in at least one of claims 1 to 7 in curable mixtures, in particular paint formulations.

**11.** The use as claimed in claim 10, wherein the paint formulations are electro-dipcoats.

**Revendications**
**Revendications pour les Etats contractants suivants : AT, BE, DE, FR, GB, IT, NL, SE**

**1.** Composante de durcissement (A) pour résines synthétiques (B) aptes à former des amides et/ou des esters, qui est un produit résultant de la réaction de :
(a) un poly-isocyanate,
(b) un ester alkylique à CH acide,
(c) une polyamine et
(d) éventuellement d'autres composés à NH et/ou OH réactifs,
et qui est caractérisée en ce que le composé (b) répond à la formule I :

$X\text{-}CHR^2\text{-}CO_2R^1$ (I)

dans laquelle X représente $CO_2R^1$, ON, $CONH_2$, $CONHR^1$, $CON(R^1)_2$, $COR^1$ ou $NO_2$, $R^1$ représente un alkyle ramifié ou non qui contient de 1 à 8 atomes de carbone et $R^2$ représente H ou $R^1$,
et la polyamine (c) est une poly-oxyalkylène-amine contenant au moins deux radicaux amino.

**2.** Composante de durcissement selon la revendication 1 caractérisée en ce que le poly-isocyanate (a) est un diisocyanato-toluène, le 1,6-diisocyanato-hexane ou une diisocyanato-isophorone.

**3.** Composante de durcissement selon les revendications 1 et/ou 2 caractérisée en ce que, dans la formule I, le symbole X représente un radical $CO_2R^1$ (dans lequel $R^1$ représente un alkyle en $C_1$-$C_6$) ou CN, et $R^2$ représente H.

**4.** Composante de durcissement selon au moins une des revendications 1 à 3, caractérisée en ce que le composé (b) est un malonate de dialkyle ou un cyanacétate d'alkyle.

**5.** Composante de durcissement selon au moins une des revendications 1 à 4, caractérisée ce que la poly-oxyalkylène-amine (c) répond à la formule générale II :

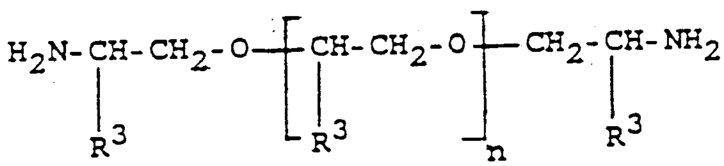

(II)

dans laquelle les $R^3$ représentent chacun, indépendamment les uns des autres, l'hydrogène ou un alkyle contenant de 1 à 6 atomes de carbone, et n désigne un nombre entier de 1 à 50.

**6.** Composante de durcissement selon au moins une des revendications 1 à 4, caractérisée en ce que la poly-oxyalkylène-amine (c) répond à la formule générale III :

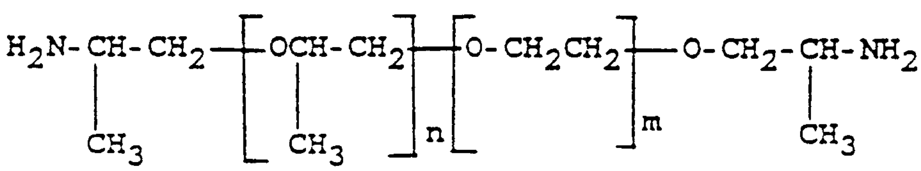

(III)

dans laquelle la somme (n + m) représente un nombre entier pouvant aller de 1 à 50, et m et n sont égaux chacun à un nombre entier de 1 à 49.

**7.** Composante de durcissement selon au moins une des revendications 1 à 4, caractérisée en ce que la poly-oxyalkylène-amine (c) répond à la formule générale IV :

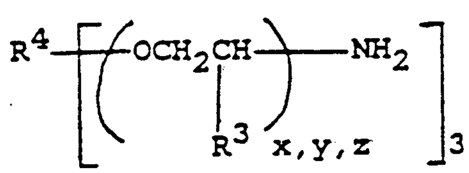

(IV)

dans laquelle $R^4$ représente le radical d'un trialcool, $R^3$ a la signification qui lui a été donnée ci-dessus, et x, y et z ont les mêmes significations que m ou n.

**8.** Procédé pour préparer la composante de durcissement (A) selon au moins une des revendications 1 à 7, procédé caractérisé en ce qu'on fait réagir les uns avec les autres (a) un poly-isocyanate, (b) un

ester alkylique à CH acide de formule I selon la revendication 1, (c) une poly-oxyalkylène-amine contenant au moins deux radicaux amino, et éventuellement (d) d'autres composés à NH et/ou OH réactifs.

**9.** Procédé selon la revendication 8 caractérisé en ce que la réaction est effectuée en présence de solvants inertes à l'égard des radicaux isocyanato et de catalyseurs.

**10.** Procédé selon les revendications 8 et/ou 9, procédé caractérisé en ce qu'on utilise le poly-isocyanate (a) et l'ester alkylique à CH acide (b) en des quantités telles qu'il y ait, pour n mol de radicaux isocyanato, au moins (n-1) mol de l'ester alkylique à CH acide.

**11.** Procédé selon au moins une des revendications 8 à 10, caractérisé en ce qu'on fait d'abord réagir le poly-isocyanate (a) et l'ester alkylique à CH acide (b), puis on fait réagir le produit réactionnel, qui renferme encore des radicaux isocyanato, avec la poly-oxyalkylène-amine (c) et éventuellement avec d'autres composés (d) à radicaux NH et/ou OH réactifs.

**12.** Mélanges durcissables à base d'une composante de durcissement (A), d'un liant (B), éventuellement d'un diluant (0) et éventuellement d'additifs (D), mélanges caractérisés en ce qu'ils contiennent, comme composante de durcissement, la composante (A) selon une ou plusieurs des revendications 1 à 7.

**13.** Mélange durcissable selon la revendication 12 caractérisé en ce que le liant (B) a une masse moléculaire moyenne en poids ($M_P$) comprise entre environ 1000 et environ 20 000 et contient des radicaux hydroxy et/ou des radicaux amino.

**14.** Application de la composante de durcissement selon au moins une des revendications 1 à 7 dans des mélanges durcissables, plus particulièrement dans des compositions pour peintures ou vernis.

**15.** Application selon la revendication 14 caractérisée en ce que les compositions pour peintures ou vernis sont des peintures à appliquer par trempage électrophorétique.

**Revendications pour l'Etat contractant suivant : ES**

**1.** Procédé pour préparer une composante de durcissement (A) pour des résines synthétiques (B) capables de former des amides et/ou des esters, selon lequel on fait réagir les uns avec les autres (a) un poly-isocyanate, (b) un ester alkylique à CH acide, (c) une polyamine et éventuellement (d) d'autres composés à radicaux NH et/ou OH réactifs, ledit procédé étant caractérisé en ce que le composé (b) répond à la formule I :

$X\text{-}CHR^2\text{-}CO_2R^1$ (I)

dans laquelle X représente $CO_2R^1$, CN, $CONH_2$, $CONHR^1$, $CON(R^1)_2$, $COR^1$ ou $NO_2$, $R^1$ représente un alkyle ramifié ou non qui contient de 1 à 8 atomes de carbone et $R^2$ représente H ou $R^1$,
et la polyamine (c) est une poly-oxyalkylène-amine contenant au moins deux radicaux amino.

**2.** Procédé selon la revendication 1 caractérisé en ce que le poly-isocyanate (a) est un diisocyanato-toluène, le 1,6-diisocyanato-hexane ou une diisocyanato-isophorone.

**3.** Procédé selon les revendications 1 et/ou 2 caractérisé en ce que, dans la formule I, le symbole X représente un radical $CO_2R^1$ (dans lequel $R^1$ représente un alkyle en $C_1$-$C_6$), ou CN, et $R^2$ représente H.

**4.** Procédé selon au moins une des revendications 1 à 3, caractérisé en ce que le composé (b) est un malonate de dialkyle ou un cyanacétate d'alkyle.

**5.** Procédé selon au moins une des revendications 1 à 4, caractérisé ce que la poly-oxyalkylène-amine (c) répond à la formule générale II :

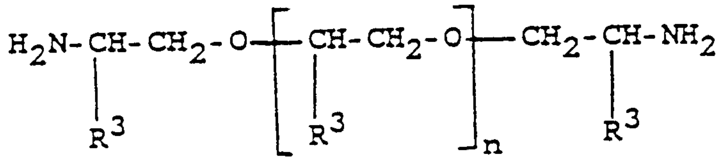

(II)

dans laquelle les $R^3$ représentent chacun, indépendamment les uns des autres, l'hydrogène ou un alkyle contenant de 1 à 6 atomes de carbone, et n désigne un nombre entier de 1 à 50.

**6.** Procédé selon au moins une des revendications 1 à 4, caractérisé en ce que la poly-oxyalkylène-amine (c) répond à la formule générale III :

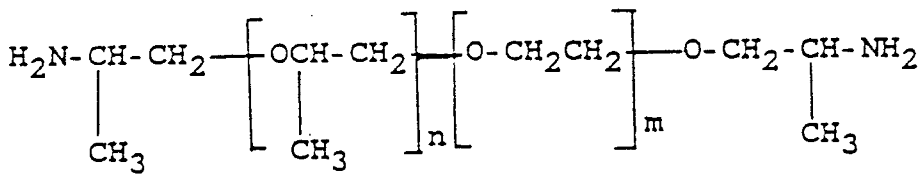

(III)

dans laquelle la somme (n + m) représente un nombre entier pouvant aller de 1 à 50, et m et n sont égaux chacun à un nombre entier de 1 à 49.

**7.** Procédé selon au moins une des revendications 1 à 4, caractérisé en ce que la poly-oxyalkylène-amine (c) répond à la formule générale IV :

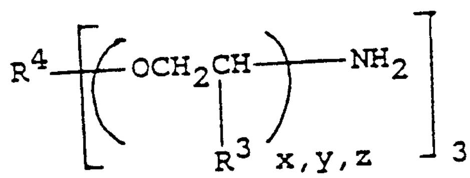

(IV)

dans laquelle $R^4$ représente le radical d'un trialcool, $R^3$ a la signification qui lui a été donnée ci-dessus, et x, y et z ont les mêmes significations que m ou n.

**8.** Mélanges durcissables à base d'une composante de durcissement (A), d'un liant (B), éventuellement d'un diluant (C) et éventuellement d'additifs (D), mélanges caractérisés en ce qu'ils contiennent, comme composante de durcissement, la composante (A) obtenue selon une ou plusieurs des revendications 1 à 7.

**9.** Mélange durcissable selon la revendication 8 caractérisé en ce que le liant (B) a une masse moléculaire moyenne en poids ($M_P$) comprise entre environ 1000 et environ 20 000 et contient des radicaux hydroxy et/ou des radicaux amino.

**10.** Application de la composante de durcissement selon au moins une des revendication 1 à 7 dans des mélanges durcissables, plus particulièrement dans des compositions pour peintures ou vernis.

**11.** Application selon la revendication 10 caractérisée en ce que les compositions pour peintures ou vernis sont des peintures à appliquer par trempage électrophorétique.